# EUROPÄISCHE PATENTANMELDUNG

(11) **EP 3 269 492 A1**
(43) Veröffentlichungstag der Anmeldung: **17.01.2018**
(21) Anmeldenummer: 16179594.3
(22) Anmeldetag: 15.07.2016
(51) Int. Cl.: B23K 20/10, B29C 65/08, B29C 65/00

(54) **VORRICHTUNG ZUM ULTRASCHALLSCHWEISSEN UND SONOTRODE FÜR EINE SOLCHE VORRICHTUNG**

(71) Anmelder: Telsonic Holding AG, 9552 Bronschhofen (CH)
(72) Erfinder: Büttiker, Albert, 9607 Mosnang (CH); Solenthaler, Peter, 9543 St. Margarethen (CH)
(74) Vertreter: Hepp Wenger Ryffel AG

(57) **Zusammenfassung**

Die Erfindung betrifft eine Vorrichtung (1) zum Ultraschallschweissen und eine Sonotrode (2) für eine solche Vorrichtung (1). Die Sonotrode (2), welche von einem Schwingungserzeuger zu Längsschwingungen anregbar ist, weist mindestens einen ersten Abstützungsbereich (3) auf. Die Vorrichtung (1) umfasst eine Sonotrodenaufnahme (5) mit einem Stützblock (6), welcher die Sonotrode (2) in dem ersten Abstützbereich (3) abstützt. In dem ersten Abstützungsbereich (3) der Sonotrode (2) ist eine Gewindebohrung (4) vorgesehen, deren Gewindeachse (G) senkrecht zur Längsachse (L) der Sonotrode (2) verläuft, und in dem Stützblock (6) ist ein Durchgang (8) vorgesehen, der in einem montierten Zustand mit der Gewindebohrung (4) in dem ersten Abstützungsbereich (3) fluchtet, so dass die Sonotrode (2) mit einer in die Gewindebohrung (4) eingreifenden Schraube (9) durch den Durchgang (8) an den Stützblock (6) heranziehbar ist.

## Beschreibung

Die Erfindung betrifft eine Vorrichtung zum Ultraschallschweissen und eine Sonotrode für eine solche Vorrichtung gemäss den Merkmalen des Oberbegriffs der unabhängigen Ansprüche.

Beim Ultraschallschweißen wird mechanische, hochfrequente Schwingungsenergie zum Beispiel über ein torsional oder ein linear angeregtes Schwingsystem in Fügeteile eingeleitet, wobei die Fügeflächen einer lokal begrenzten, sehr kurzzeitigen Erwärmung ausgesetzt werden und eine stoffschlüssige Verbindung erzeugt wird.

Hierzu wird eine von einem Generator erzeugte Wechselspannung mit einer Ultraschallfrequenz an ein Schwingsystem weitergegeben. Das Schwingsystem kann aus einem Konverter, einem Booster oder Amplitudentransformationsstück und einer Sonotrode bestehen.

In dem Konverter wird zumeist durch den Einsatz von Piezokeramiken elektrische in mechanische Energie umgewandelt. Die Schwingung wird an die Sonotrode weitergegeben. Ein Amplitudentransformationsstück kann je nach geometrischer Gestaltung die Aufgabe als Amplitudenüber- bzw. untersetzer erfüllen.

Die Sonotrode wandelt, ebenfalls bedingt durch ihre geometrische Auslegung, die Ausgangsamplitude des Konverters oder Amplitudentransformationsstücks in eine Arbeitsamplitude um.

Die Sonotrode wird mit einer Arbeitsfläche in Kontakt mit dem zu schweissenden Material gebracht und stellt somit das eigentliche Schweisswerkzeug dar, das die Schwingungsenergie in den sonotrodenseitig zugewandten Fügepartner einkoppelt. Die Arbeitsfläche kann einteilig mit der Sonotrode ausgeführt sein oder als separates Teil an die Sonotrode montiert sein, zum Beispiel angeschraubt sein.

Das Schwingsystem kann zum Beispiel mit einer Resonanzfrequenz in longitudinaler Richtung vibrieren, entlang einer Längsachse der Sonotrode, wobei die maximale Amplitude an der Arbeitsfläche der Sonotrode auftritt. Umgekehrt gibt es Bereiche minimaler Vibration, Knoten genannt, die für eine Befestigung oder Abstützung des Schwingsystems geeignet sind, wo beispielsweise ein Befestigungsflansch angebracht ist.

Mit der Befestigung soll ein definiertes Anbringen der Komponenten des Schwingsystems ermöglicht und gleichzeitig ein schnelles Montieren bzw. Auswechseln sichergestellt werden.

Aus der DE19921177 ist eine Sonotrodenaufnahme bekannt, die als aus einem Stück gearbeitete Parallelführung ausgebildet ist und eine Klemmvorrichtung für das Ultraschallschwingsystem umfasst. Die Klemmvorrichtung umgibt das Schwingsystem form- und kraftschlüssig.

Dazu müssen entsprechende Passflächen sehr präzise gefertigt werden.

In der DE102004022313 ist eine Klemmeinrichtung offenbart, mit der eine eindeutige Fixierung der Sonotrode in ihrem Schwingungsknoten sichergestellt werden soll und gleichzeitig ein einfaches bzw. schnelles Auswechseln der Sonotrode ermöglicht wird. Die Sonotrode wird von einer als Ringelement ausgebildeten Halterung umgeben, die in einer entsprechend angepassten Vertiefung in der Oberfläche der Sonotrode passgenau einsetzbar ist. Das Ringelement weist Abschnitte auf, so dass die Sonotrode an zwei Punkten abstützbar ist. Gegenüberliegend wird von der Halterung eine Schraube aufgenommen, über welche die Sonotrode in einem dritten Punkt abgestützt wird.

Auch in dieser Lösung müssen Passflächen präzise aufeinander abgestimmt sein.

Aus der WO2014170131 ist eine Sonotrodenlagerung bekannt, bei der die Sonotrode in ihrem Schwingungsknoten abgestützt wird. Die Lagerung weist einen Vorsprung auf, der in eine Ausnehmung in der Sonotrode eingreift.

Bei den bekannten Lösungen muss die Sonotrode häufig in eine sie später umgebende passgenaue Aufnahme eingeführt werden oder die Aufnahme muss um die Sonotrode herum angeordnet werden. Das erschwert die Montage. Abstützelemente können überdies in Eigenschwingungen geraten, was das Gesamtsystem schwächen oder stören kann.

Der Erfindung liegt daher die Aufgabe zugrunde, die Nachteile des Bekannten zu überwinden und insbesondere eine Vorrichtung und eine Sonostrode zum Ultraschallschweissen zu schaffen, die einen besonders einfachen Aufbau besitzen, kostengünstig gefertigt werden können und die eine einfache und schnelle Montage der Sonotrode erlauben.

Die Aufgabe wird gelöst durch eine Vorrichtung zum Ultraschallschweissen, die wenigstens eine Sonotrode umfasst, welche von einem Schwingungserzeuger bevorzugt zu Längsschwingungen anregbar ist.

Die Sonotrode weist mindestens einen ersten Abstützungsbereich auf.

Die Vorrichtung umfasst ausserdem eine Sonotrodenaufnahme mit einem Stützblock, welcher die Sonotrode im montierten Zustand in dem ersten Abstützbereich abstützt.

In einem montierten Zustand liegt bevorzugt eine Aussenfläche des ersten Abstützbereiches der Sonotrode an einer korrespondierenden Fläche des Stützblocks an.

Erfindungsgemäss ist in dem ersten Abstützbereich der Sonotrode eine Gewindebohrung vorgesehen, deren Gewindeachse quer, bevorzugt senkrecht, zur Längsachse der Sonotrode verläuft. In dem Stützblock befindet sich ein Durchgang in Form einer entlang einer Durchgangsachse durch den Stützblock durchgehenden Öffnung. In einem montierten Zustand der Sonotrode fluchtet der Durchgang mit der Gewindebohrung in dem ersten Abstützungsbereich. Die Sonotrode ist dann mit einer in die Gewindebohrung eingreifenden Schraube durch den Durchgang an den Stützblock heranziehbar.

Alternativ kann in der Sonotrode eine durchgehende Öffnung angebracht sein und im Stützblock ein Gewinde, sodass eine Schraube von der Sonotrode aus in den Stützbock geführt werden kann und der Stützblock an die Sonotrode gezogen werden kann.

Der Abstützungsbereich hat dann zu dem Stützblock und damit zu der Sonotrodenaufnahme einen perfekten Kontakt, wodurch eine optimale Befestigung der Sonotrode erreicht werden kann. Es kann ausreichen, mittels der Schraube die Fixierung zwischen Sonotrode und Sonotrodenaufnahme nur an einem Befestigungspunkt vorzunehmen, was eine unaufwendige Montage erlaubt. Die Schraube ist überdies gut von der Seite der Sonotrode und der Sonotrodenaufnahme erreichbar, was eine schnelle und einfache Montage weiter begünstigt.

Der Durchgang kann ebenfalls als Gewindebohrung ausgeführt sein. Die Befestigungsschraube hat dann einen festen Sitz bezüglich der Sonotrodenaufnahme und der Sonotrode.

Vorteilhafterweise weist die Sonotrode mindestens einen zweiten Abstützungsbereich auf. An der Sonotrodenaufnahme ist bevorzugt ein Halteblock befestigbar, welcher die Sonotrode im montierten Zustand in dem zweiten Abstützungsbereich abstützt.

Der Halteblock kann als Auflage und/oder als Verdrehsicherung für die Sonotrode dienen.

Bevorzugt liegt der zweite Abstützungsbereich dem ersten Abstützungsbereich bezüglich der Längsachse der Sonotrode gegenüber, so dass die Sonotrode von zwei Seiten eingefasst ist. Damit ergibt sich eine solide Befestigung, mit welcher es möglich ist, eine ausreichend hohe Kraft auf die zu verschweissenden Werkstücke auszuüben.

Der Halteblock ist insbesondere mit einer oder mehreren Schrauben an der Sonotrodenaufnahme befestigbar.

Zur Montage der Sonotrode kann zunächst der erste Abstützungsbereich in der Sonotrode mit dem Stützblock in Kontakt gebracht werden. Mit einer Schraube, die durch den Durchgang in dem Stützblock und in die Gewindebohrung im ersten Abstützungsbereich geführt ist, kann die Sonotrode an die Sonotrodenaufnahme herangezogen werden. Zusätzlich kann der Halteblock an den zweiten Abstützungsbereich angelegt werden und anschliessend an der Sonotrodenaufnahme befestigt werden.

Beim Heranführen der Sonotrode an die Sonotrodenaufnahme muss der Sonotrode nur bezüglich des Stützblocks positioniert werden. Die genaue Ausrichtung geschieht durch die Abstützung auf dem Stützblock und/oder bei der Fixierung mit der Schraube und beim Heranziehen der Sonotrode an den Stützblock.

Die Sonotrodenaufnahme kann so angeordnet sein, dass die Sonotrode im montierten Zustand an dem Stützblock hängt oder auf ihm aufliegt. Im zweiten Fall muss die Sonotrode nicht unbedingt an dem Stützblock festgeschraubt werden.

In einer vorteilhaften Ausführung ist zwischen dem zweiten Abstützungsbereich und dem Halteblock ein Dämpfungselement vorgesehen. Das Dämpfungselement kann einen faserverstärkten Kunststoff enthalten. Unter Belastung kann es in der Sonotrode zu Biegeschwingungen kommen, die durch das Dämpfungselement von dem Halteblock entkoppelt werden, was insbesondere von Bedeutung sein kann, wenn die Sonotrode nicht mit einer Schraube fest an den Stützblock herangezogen ist.

Bevorzugt ist der der Stützblock nicht zerstörungsfrei von der Sonotrodenaufnahme entfernbar. Der Stützblock kann dabei einteilig mit der Sonotrodenaufnahme gefertigt sein oder nicht lösbar mit der Sonotrodenaufnahme verbunden sein. Die Sonotrodenaufnahme kann ein flanschartiges oder ringförmiges Element umfassen, an welchem der Stützblock angeformt ist. Die Sonotrodenaufnahme ist bevorzugt aus Messing gefertigt.

Die Sonotrode wird bei der Montage bevorzugt in einen Durchgang der Sonotrodenaufnahme geführt, dessen Achse entlang der Sonotrodenachse verläuft.

In einer besonders günstigen Ausführung der Erfindung weist der Stützblock eine Auflagefläche auf, an welcher in einem montierten Zustand eine komplementäre Fläche des ersten Abstützungsbereichs der Sonotrode anliegt. Die Flächen können so ausgebildet sein, dass zumindest in einer Richtung ein Formschluss gebildet wird.

Bevorzugt ist der erste Abstützungsbereich der Sonotrode mit einer Schraube an den Stützblock herangezogen.

Wird die Schraube gelöst und gegebenenfalls der Halteblock entfernt, kann die Sonotrode von der Sonotrodenaufnahme abmontiert werden.

Vorteilhafterweise ist die Gewindebohrung im ersten Abstützungsbereich als Sackloch ausgeführt, das sich bevorzugt nicht bis zur zentralen Längsachse der Sonotrode erstreckt. Die Sonotrode kann somit über weite Teile ihres Durchmessers unabhängig von der Befestigung frei schwingen.

Der Durchgang im Stützblock ist vorteilhafterweise als durchgehende Bohrung ausgeführt.

Bevorzugt ist die Gewindebohrung im ersten Abstützungsbereich der Sonotrode im Bereich eines longitudinalen Schwingungsknotens angeordnet. Der Befestigungspunkt der Sonotrode schwingt daher minimal, was die Festigkeit und Haltbarkeit der Fixierung begünstigt.

In einer vorteilhaften Ausführung ist in dem ersten Abstützungsbereich ein Führungselement angebracht, das mit einem entsprechenden Element am Stützblock zusammenwirken kann.

Insbesondere kann das Führungselement vorstehend sein, so dass es beispielsweise in eine in dem Stützblock vorgesehene korrespondierende Ausnehmung einführbar ist.

Das Führungselement kann beispielweise als Ringelement ausgeführt sein, welches die Gewindebohrung umgibt.

Die korrespondierende Ausnehmung kann als Vertiefung, zum Beispiel als Nut, ausgeführt sein, in welche das Führungselement bei der Montage einschiebbar ist.

Das Führungselement kann dazu beitragen, während der Montage der Sonotrode im Ringelement die Gewindebohrung und den Durchgang axial zueinander auszurichten, damit die Schraube anschliessend leicht eingeführt werden kann. Das Führungselement und die Ausnehmung können ausserdem zu einer formschlüssigen Verbindung beitragen, sodass eine stabile Verbindung vorliegt und zum Beispiel die Montage des Ringelements mit angebrachter Sonotrode in einer Maschinenaufnahme, beispielweise an einer Basisstation, begünstigt wird.
In einer zweckdienlichen Ausführung der Vorrichtung weist die Sonotrode zwei bezüglich der Längsachse gegenüberliegende Abstützungsbereiche auf, die gleich ausbildet sind. Die Sonotrode ist dann mit einer Schraube an den Stützblock heranziehbar, unabhängig davon, welcher Abstützungsbereich an der Auflagefläche des Stützblocks anliegt.

Insbesondere ist die Sonotrode symmetrisch bezüglich einer 180°-Drehung um die Längsachse. Die Sonotrode kann dann in zwei verschiedenen Montagepositionen benutzt werden.

Insbesondere sind der erste und der zweite Abstützungsbereich gleich ausgebildet, das heisst, in beiden Abstützungsbereichen befindet sich eine Gewindebohrung und beide Abstützungsbereiche sind zum Anliegen an den Halteblock geeignet. Bevorzugt ist das Führungselement zur Aufnahme eines Dämpfungselements geeignet.

Bevorzugt ist an der Sonotrode bezüglich der Längsachse umfangsseitig wenigstens eine Arbeitsfläche angeordnet, weiter bevorzugt sind zwei bezüglich der Längsachse gegenüberliegende Arbeitsflächen vorgesehen.

Die Arbeitsfläche, die während des Ultraschallschweissens in Kontakt mit einem Fügeteil steht, kann an einem Werkzeugelement angeordnet sein, das seinerseits an der Sonotrode befestigt ist.

Die Arbeitsfläche kann auch einteilig mit der Sonotrode ausgeführt sein.

In einer beispielhaften Ausführung besitzt die Sonotrode einen Blockabschnitt mit jeweils parallelen Seitenflächen, bevorzugt mit rechteckigem oder quadratischem Querschnitt, einen sich verjüngenden Abschnitt und einen Arbeitsabschnitt, in welchem wenigstens eine Arbeitsfläche angeordnet ist.

Alternativ kann die Sonotrode einen Grundkörper mit runder Querschnittsfläche aufweisen, wobei die Abstützungsbereiche gefräst sein können.

Der Blockabschnitt dient zur Aufnahme der Schwingung. In dem Blockabschnitt kann eine Gewindebohrung längs der Achse vorgesehen sein, über welche die Sonotrode an einem Konverter oder einem Amplitudentransformationsstück befestigt werden kann.

In dem verjüngenden Bereich kann ein rechteckiger Querschnitt vorliegen, wobei zwei Seitenflächen parallel bleiben und sich zwei Seitenflächen annähern. Die Verjüngung führt zu einer Amplitudentransformation.

Vorteilhafterweise ist der Abstützungsbereich in dem Blockabschnitt der Sonotrode angeordnet.

Die Befestigung der Sonotrode erfolgt also bevorzugt im Blockabschnitt, bevor die Amplitude transformiert wird.

Der Blockabschnitt, der verjüngende Abschnitt und der Arbeitsabschnitt sind insbesondere entlang der Längsachse der Sonotrode nacheinander angeordnet, bevorzugt jeweils direkt nacheinander.

Die Sonotrode soll während des Betriebs bevorzugt auf konstanter Temperatur gehalten werden. Die zum Heranziehen der Sonotrode an den Stützblock dienende Schraube ist daher bevorzugt mit Temperiermitteln beaufschlagbar. Sie weist dazu insbesondere mindestens einen Temperiermittelkanal auf, durch den ein Temperierfluid, zum Beispiel eine Kühlflüssigkeit, leitbar ist. Bevorzugt ist der Kanal so ausgeführt, dass bei montierter Schraube der Kanal bis in einen Bereich reicht, der innerhalb der Sonotrode angeordnet ist. Der Kanal ist bevorzugt mit einer Temperierfluidversorgung in Fluidverbindung bringbar, so dass er beispielweise einen Teil eines Temperiermittelkreislaufs bildet. Denkbar ist es aber auch, im Temperiermittelkanal eine elektrische Leitung zum Speisen eines elektrischen Heiz- oder Kühlelements durchzuführen.

Bevorzugt weist die Sonotrodenaufnahme eine lösbares Indexierelement zur Feinjustierung auf.

Die Sonotrodenaufnahme kann dazu dienen, die Achse der Sonotrode bezüglich einer Basisstation zu orientieren und zu fixieren. Dazu kann vorgesehen sein, dass die Sonotrodenaufnahme an einer Halterung der Basisstation zu befestigen ist. Die Halterung kann als Öffnung ausgeführt sein, in welche die Sonotrodenaufnahme entlang ihrer Längsachse einschiebbar ist. Dazu ist die Innenkontur der Öffnung bevorzugt im Wesentlichen komplementär zu der Aussenkontur der Sonotrodenaufnahme ausgebildet.

Um das Feinjustieren der Sonotrode bezüglich einer Werkzeugoberfläche oder der Fügepartner zu ermöglichen, kann vorgesehen sein, dass zwischen Öffnung und Sonotrodenaufnahme zunächst noch ein Spiel besteht, so dass die Sonotrodenaufnahme im eingeschobenen Zustand zumindest noch geringfügig um ihre Längsachse drehbar sein kann.

Bevorzugt ist die Sonotrodenaufnahme mit einem Indexierelement ausgestattet, welches das Herstellen einer drehfesten Verbindung mit der Basisstation ermöglicht. Bei dem Indexierelement kann es sich um eine Indexierplatte mit mindestens einem Zapfen handeln. Die Indexierplatte kann mit mindestens einer Schraube an der Sonotrodenaufnahme fixierbar sein. Eine solche Indexierplatte dient zum Beispiel zur Feinjustierung der Ausrichtung bezüglich einer Drehung um die Längsachse.

Bei der Montage des Sonotrodenaufnahme an der Basisstation wird die Sonotrodenaufnahme in die Öffnung der Basisstation geschoben, wobei die Indexierplatte noch nicht fest an die Sonotrodenaufnahme herangezogen ist und ihrerseits, zumindest in geringem Masse, gegenüber der Sonotrodenaufnahme bewegt werden kann.

Der mindestens eine Zapfen greift in eine entsprechende Nut in der Öffnung ein. Nun kann die Sonotrodenaufnahme noch geringfügig, insbesondere um etwa 1-2°, gedreht werden, bis die Arbeitsfläche der Sonotrode gegenüber einem Werkzeug (z.B. einem Amboss) die gewünschte Ausrichtung hat. Dann wird die Indexierplatte festgeschraubt. Ist die Indexierplatte einmal festgeschraubt, also mit der Schraube an die Sonotrodenaufnahme herangezogen, besteht eine drehfeste Verbindung zwischen Sonotrodenaufnahme und Basisstation.

Die Nut kann fest in der Öffnung vorgegeben sein oder mit einem Nutenstein gebildet werden, einem lösbar befestigten und innerhalb der Buchse verschiebbaren Block.

Alternativ oder zusätzlich können andere Indexierelemente vorgesehen sein, mittels derer sich die Ausrichtung der Sonotrode bezüglich einer transversalen Verschiebung, zum Beispiel entlang oder senkrecht zur Längsachse, feinjustieren lassen.

Die der Erfindung zugrunde liegende Aufgabe wird weiterhin gelöst durch eine Sonotrode, insbesondere für einen Vorrichtung zum Ultraschallschweissen wie sie oben beschrieben ist, welche von einem Schwingungserzeuger zu Längsschwingungen anregbar ist.

Erfindungsgemäss umfasst die Sonotrode einen Blockabschnitt mit jeweils parallelen gegenüberliegenden Seitenflächen und einen Arbeitsbereich, in welchem mindestens eine Arbeitsfläche angeordnet ist. Die Sonotrode weist in dem Blockabschnitt mindestens einen ersten Abstützungsbereich auf, in welchem eine Gewindebohrung vorgesehen ist, deren Gewindeachse senkrecht zur Längsachse der Sonotrode verläuft.

Die Gewindebohrung ist insbesondere an einer Stelle vorgesehen, an der sich beim Betrieb der Sonotrode ein Schwingungsknoten befindet.

Zwischen dem Blockabschnitt und dem Arbeitsabschnitt ist insbesondere ein sich verjüngenden Abschnitt vorgesehen.

Bevorzugt besitzt die Sonotrode mindestens einen zweiten Abstützungsbereich, der dem ersten Abstützungsbereich bevorzugt bezüglich der Längsachse gegenüber liegt. Die Abstützungsbereiche sind bevorzugt gleich ausbildet sind. Insbesondere ist die Sonotrode symmetrisch bezüglich einer 180°-Drehung um die Längsachse.

Vorteilhafterweise besitzt die Sonotrode im Blockabschnitt eine entlang der Längsachse vorgesehene Ausnehmung, zum Beispiel eine Gewindebohrung, zum Anbringen von einem Befestigungselement, mittels dessen die Sonotrode an einen Schwingungserreger gekoppelt werden kann.

Im Folgenden wird die Erfindung anhand von Ausführungsbeispielen und Zeichnungen im Detail erläutert. Dabei zeigen
- Figur 1:: eine Schnitt-Darstellung eines ersten Beispiels für eine erfindungsgemässe Vorrichtung
- Figur 2:: eine schematische Darstellung des ersten Beispiels in einer ersten Draufsicht senkrecht zur Längsachse;
- Figur 3:: eine schematische Darstellung des ersten Beispiels in einer zweiten Draufsicht entlang der Längsachse;
- Figur 4:: eine Darstellung der erfindungsgemässen Vorrichtung in einer perspektivischen Ansicht;
- Figur 5:: eine Schnitt-Darstellung der erfindungsgemässen Vorrichtung alternativ montiert;
- Figur 6:: eine schematische Darstellung der erfindungsgemässen Vorrichtung im unmontierten Zustand in einer perspektivischen Ansicht;
- Figur 7:: eine Schnitt-Darstellung eines zweiten Beispiels für eine erfindungsgemässe Vorrichtung;
- Figur 8:: eine Darstellung des zweiten Beispiels in einer perspektivischen Ansicht;
- Figur 9:: eine Darstellung einer Basisstation in einer perspektivischen Ansicht.

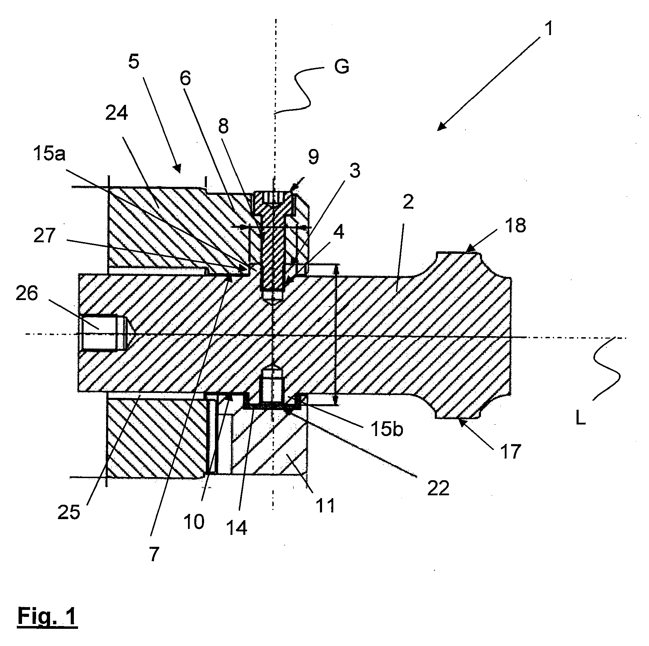

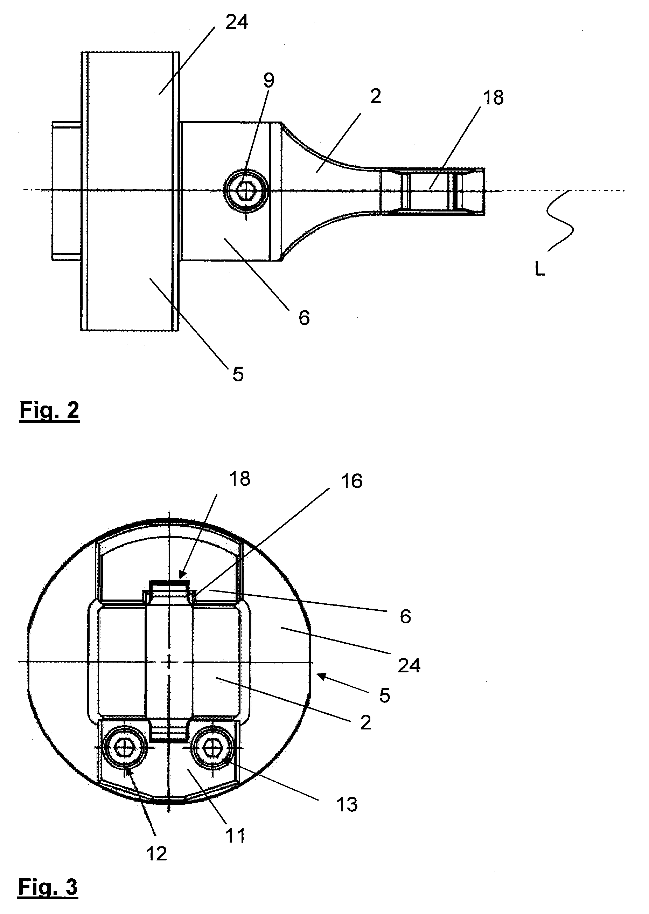

Figur 1 zeigt eine schematische Darstellung einer ersten erfindungsgemässen Vorrichtung 1 zum Ultraschallschweissen in einer ersten Schnittansicht entlang der Längsachse, Figur 2 dieselbe Vorrichtung 1 in einer ersten Draufsicht senkrecht zur Längsachse L, Figur 3 in einer zweiten Draufsicht entlang der Längsachse L von der Spitze der Sonotrode her gesehen.

Die Vorrichtung 1 umfasst eine Sonotrode 2, welche von einem nicht in der Zeichnung dargestellten Schwingungserzeuger zu Längsschwingungen entlang einer Längsachse L anregbar ist. Die Sonotrode 2 weist einen ersten Abstützungsbereich 3 auf.

Die Vorrichtung 1 umfasst ausserdem eine Sonotrodenaufnahme 5 mit einem Stützblock 6, welcher die Sonotrode 2 in dem ersten Abstützbereich 3 abstützt.

In dem ersten Abstützungsbereich 3 der Sonotrode 2 ist eine Gewindebohrung 4 vorgesehen, deren Gewindeachse G senkrecht zur Längsachse L der Sonotrode 2 verläuft.

In dem Stützblock 6 ein Durchgang 8 vorgesehen, der mit der Gewindebohrung 4 in dem ersten Abstützungsbereich 3 fluchtet. Die Sonotrode 2 wird mit einer in die Gewindebohrung 4 eingreifenden Schraube 9 durch den Durchgang 8 an den Stützblock 6 gezogen.

Die Sonotrode 2 weist einen zweiten Abstützungsbereich 10 auf, der dem ersten Abstützungsbereich 3 bezüglich der Längsachse L gegenüber liegt. An der Sonotrodenaufnahme 5 ist ein Halteblock 11 befestigt, welcher die Sonotrode 2 in dem zweiten Abstützungsbereich 10 abstützt.

Die Sonotrodenaufnahme 5 weist ein Ringelement 24 auf, in welchem entlang der Längsachse L eine Durchgang 25 vorgesehen ist. In diesen ist die Sontrode 2 eingeführt. Das Ringelement 24 und der Stützblock 6 sind einteilig gefertigt.

Aus Figur 3 ist ersichtlich, dass der Halteblock 11 mit Schrauben 12, 13 an der Sonotrodenaufnahme 5 befestigt ist. Die Schrauben 12, 13 sind parallel zur Längsachse L in das Ringelement 24 der Sonotrodenaufnahme 5 geschraubt.

Zwischen dem zweiten Abstützungsbereich 10 und dem Halteblock 11 ist eine Dämpfungselement 14 angebracht.

In dem ersten Abstützungsbereich 3 und in dem zweiten Abstützungsbereich 10 der Sonotrode 2 befinden sich jeweils Führungselemente 15a, 15b, in Form von Ringelementen, die um die Gewindebohrung 4 herum angeordnet sind.

Ein Führungselement 15a greift in eine in dem Stützblock 6 vorgesehene Ausnehmung 16, die als zum Beispiel als Nut in Richtung der Längsachse L ausgeführt ist. Wir die Sonotrode 2 in der Sonotrodeaufnahme 5 montiert, so wird die Sonotrode 2 in den Durchgang 25 der Sonotrodeaufnahme 5 geführt, wobei das Führungselement 15a in der Nut 16, insbesondere bis zu einem Anschlag 27 läuft. Hat die Sonotrode 2 ihre Zielposition bezüglich der Sonotrodenaufnahme 5 erreicht und trifft das Führungselement 15a zum Beispiel auf den Anschlag 27, so kann die Sonotrode 2 mit der Schraube 9 befestigt und mit dem Halteblock 11 gesichert werden.

Das gegenüberliegende Führungselement 15b liegt in einer korrespondierenden Ausnehmung 22, welche im Halteblock 11 vorgesehen ist.

Die Sonotrode 2 weist an einem Ende zwei bezüglich der Längsachse L gegenüberliegende Arbeitsflächen 17, 18 auf.

An dem von den Arbeitsflächen 17, 18 abgewandten Ende besitzt die Sonotrode 2 eine Bohrung 26 entlang der Längsachse L. hier können nicht explizit gezeigte Befestigungsmittel zum Ankoppeln an einen ebenfalls nicht gezeigten Schwingungserzeugers angebracht werden, zum Beispiel eine Schraube.

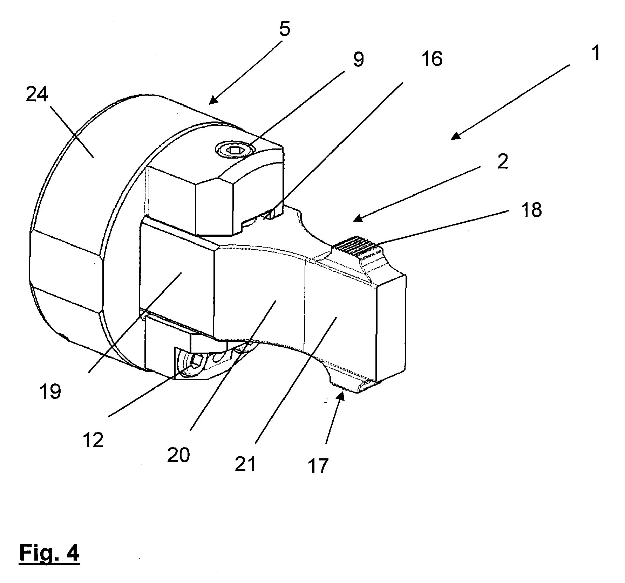

Figur 4 zeigt eine schematische Darstellung der erfindungsgemässen Vorrichtung 1 mit Sonotrode 2 und Sonotrodenaufnahme 5 in einer perspektivischen Ansicht.

Die Sonotrode 2 umfasst einen Blockabschnitt 19, in welchem die Seitenflächen jeweils parallel ausgerichtet sind, einen verjüngenden Abschnitt 20, in welchem die Sonotrode 2 schmaler wird und einen Arbeitsabschnitt 21, in welchem die Arbeitsflächen 17, 18 angeordnet sind. Die Befestigung der Sonotrode 2 an der Sonotrodenaufnahme 5 erfolgt im Blockabschnitt 19.

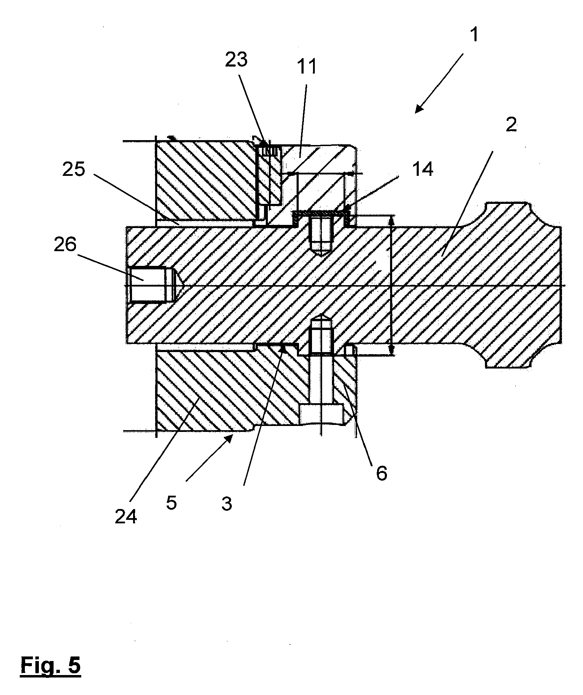

Figur 5 zeigt eine schematische Darstellung der erfindungsgemässen Vorrichtung 1 in einer Schnittansicht, bei welcher die Sonotrode 2 alternativ montiert ist.

Der erste Abstützbereich 3 liegt auf dem Stützblock 6 auf. Eine Befestigungsschraube ist in diesem Fall nicht nötig.

Von oben wird die Sonotrode 2 durch den Halteblock 11 gehalten. Sonotrode 2 und Halteblock 11 sind durch ein Dämpfungselement 14 voneinander entkoppelt.

Zusätzlich ist eine weitere Schraube 23 vorgesehen, die in ein Gewinde in der Sonotrodenaufnahme 5 geschraubt ist und auf eine Senkbohrung im Halteblock 11 drückt, wodurch eine zusätzliche Absicherung des Halteblocks 11 erreicht wird.

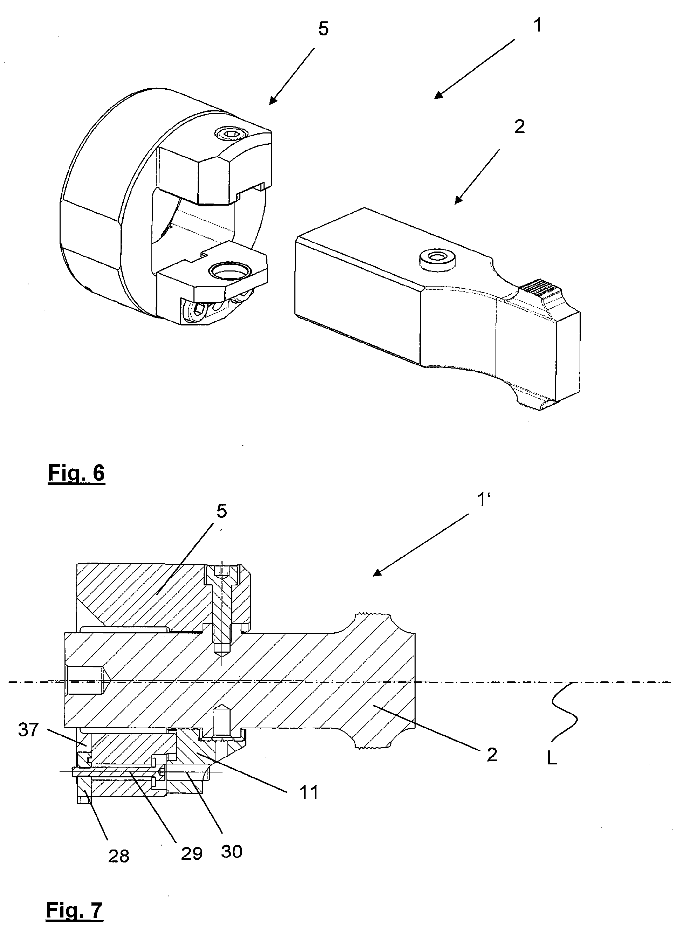

Figur 6 zeigt eine schematische Darstellung der erfindungsgemässen Vorrichtung 1 im unmontierten Zustand in einer perspektivischen Ansicht. Die Sonotrode 2 ist nicht in die Sonotrodenaufnahme 5 eingeschoben.

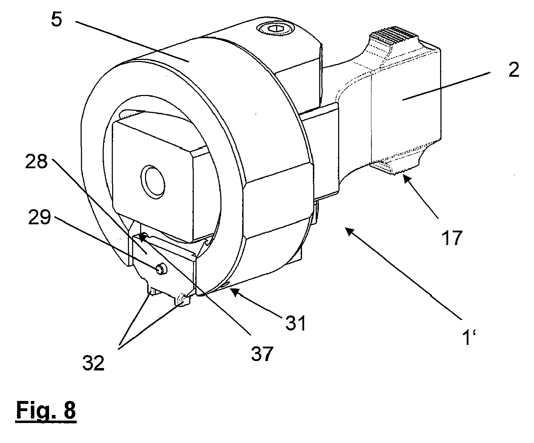

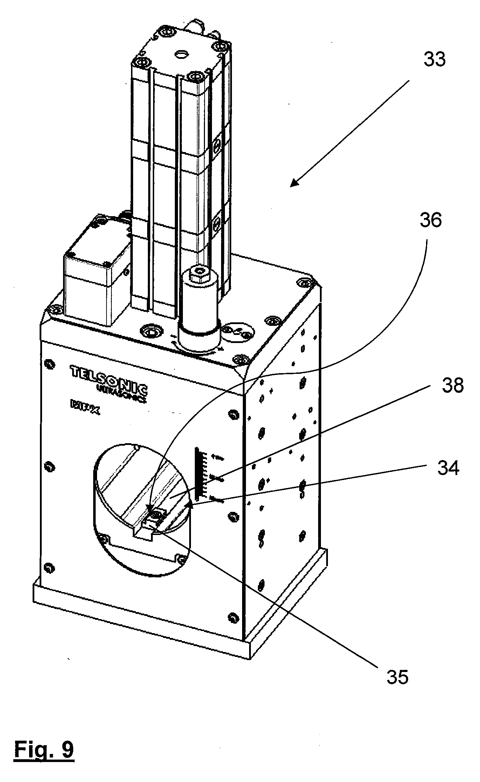

Figur 7 zeigt eine Schnitt-Darstellung eines zweiten Beispiels einer erfindungsgemässen Vorrichtung 1' in einer Schnittansicht. Bestandteile, die analog zum ersten Beispiel sind, werden nachfolgend mit den gleichen Bezugszeichen bezeichnet. Figur 8 zeigt eine Darstellung desselben Beispiels in einer perspektivischen Ansicht. Figur 9 zeigt eine schematische Darstellung einer Basisstation in einer perspektivischen Ansicht.

Zur Befestigung der Sonotrode 2 wird die Sonotrodenaufnahme 5 in die Öffnung 34 einer Basisstation 33 geführt.

An der von der Arbeitsfläche 17 der Sonotrode 2 in Längsrichtung abgewandten Seite der Sonotrodenaufnahme 5 ist als Indexierelement eine Indexierplatte 28 vorgesehen, die mit einer Schraube 29 an die Sonotrodenaufnahme 5 heranziehbar ist. Die Indexierplatte 28 kann innerhalb einer Ausnehmung 37 in der Sonotrodenaufnahme 5 angeordnet werden, in welcher die Indexierplatte geringfügig hin- und herschiebbar oder drehbar ist, solange sie nicht durch die Schraube 29 fixiert ist.

Der Halteblock 11 weist eine Ausnehmung 30 auf, in welche ein nicht explizit gezeigtes Werkzeug führbar ist, um die Schraube 29 zu drehen, sodass die Schraube 29 gedreht werden kann, wenn die Sonotrode 2 bereits gegenüber der Sonotrodenaufnahme 5 in die richtige Position gebraucht ist.

In der Sonotrodenaufnahme 5 sind ausserdem beidseitig der Indexierplatte 28 Gewinde 31 vorgesehen. Diese dienen zur Aufnahme von Madenschrauben, mit denen die Indexierplatte 28 ebenfalls gestützt werden kann.

Die Indexierplatte 28 weist zwei, in der Abbildung nach unten weisende, Zapfen 32 auf.

Beim Einschieben in die Öffnung 34 der Basisstation 33 greifen die Zapfen 32 in zwei Nuten 36, die beidseitig zwischen einem Nutenstein 35 und der Öffnung 34 gebildet sind.

Der Nutenstein 35 ist seinerseits verschiebbar in einer parallel zur Längsachse L verlaufenen Nut 38 an der Innenseite der Öffnung 34 angebracht und mit einer Schraube fixiert.

Um die Arbeitsfläche 17 der Sonotrode 2 endgültig bezüglich eines nicht dargestellten Werkzeugs (wie z.B. einen Amboss) zu positionieren, wird die Sonotrodenaufnahme 5 in der Öffnung 34 noch geringfügig um die Längsachse L gedreht. Solange die Indexierplatte 28 noch nicht fest an die Sonotrodenaufnahme5 geschraubt ist, lässt sich diese in der Buchse 34 noch um etwa 1.5-2° drehen. Ist die gewünschte endgültige Position der Sonotrode 2 erreicht, so wird die Indexierplatte 28 mit der Schraube 29 festgeschraubt und die Sonotrodenaufnahme 5 ist drehfest mit der Basisstation 33 verbunden.

Die Basisstation 33 wird meist raumfest angeordnet, weist einen Schwingungserzeuger und die notwendige Stromversorgung auf.

## Patentansprüche

1. Vorrichtung (1) zum Ultraschallschweissen, umfassend
- wenigstens eine Sonotrode (2), welche von einem Schwingungserzeuger zu Längsschwingungen anregbar ist, wobei die Sonotrode (2) mindestens einen ersten Abstützungsbereich (3) aufweist,
- eine Sonotrodenaufnahme (5) mit einem Stützblock (6), welcher die Sonotrode (2) in dem ersten Abstützbereich (3) abstützt,
**dadurch gekennzeichnet, dass** in dem ersten Abstützungsbereich (3) der Sonotrode (2) eine Gewindebohrung (4) vorgesehen ist, deren Gewindeachse (G) quer, bevorzugt senkrecht, zur Längsachse (L) der Sonotrode (2) verläuft, und
in dem Stützblock (6) ein Durchgang (8) vorgesehen ist, der in einem montierten Zustand mit der Gewindebohrung (4) in dem ersten Abstützungsbereich (3) fluchtet, sodass die Sonotrode (2) mit einer in die Gewindebohrung (4) eingreifenden Schraube (9) durch den Durchgang (8) an den Stützblock (6) heranziehbar ist.

2. Vorrichtung (1) gemäss Anspruch 1, **dadurch gekennzeichnet, dass** die Sonotrode (2) mindestens einen zweiten Abstützungsbereich (10) aufweist, der dem ersten Abstützungsbereich (3) bevorzugt gegenüber liegt, und dass an der Sonotrodenaufnahme (5) ein Halteblock (11), insbesondere mit Schrauben (12, 13), befestigbar ist, welcher die Sonotrode (2) in dem zweiten Abstützungsbereich (10) abstützt.

3. Vorrichtung (1) gemäss Anspruch 2, **dadurch gekennzeichnet, dass** zwischen dem zweiten Abstützungsbereich (10) und dem Halteblock (11) ein Dämpfungselement (14), insbesondere aus einem faserverstärkten Kunststoff, vorgesehen ist.

4. Vorrichtung (1) gemäss einem der vorher gehenden Ansprüche, **dadurch gekennzeichnet, dass** der Stützblock (6) nicht zerstörungsfrei von der Sonotrodenaufnahme (5) entfernbar ist.

5. Vorrichtung (1) gemäss einem der vorher gehenden Ansprüche, **dadurch gekennzeichnet, dass** der Stützblock (6) eine Auflagefläche (7) aufweist, an welcher in einem montierten Zustand eine komplementäre Fläche des ersten Abstützungsbereichs anliegt.

6. Vorrichtung (1) gemäss einem der vorher gehenden Ansprüche, **dadurch gekennzeichnet, dass** der erste Abstützungsbereich (3) der Sonotrode (2) mit einer Schraube (9) an den Stützblock (6) herangezogen ist, wobei die Schraube (9) bevorzugt mit einem Temperiermittel beaufschlagbar ist.

7. Vorrichtung (1) gemäss einem der vorher gehenden Ansprüche, **dadurch gekennzeichnet, dass** die Gewindebohrung (4) im ersten Abstützungsbereich (3) als Sackbohrung ausgeführt ist und/oder der Durchgang (8) im Stützblock (6) als durchgehende Gewindebohrung.

8. Vorrichtung (1) gemäss einem der vorher gehenden Ansprüche, **dadurch gekennzeichnet, dass** die Gewindebohrung (4) im ersten Abstützungsbereich (3) im Bereich eines Schwingungsknoten der Sonotrode (2) angeordnet ist.

9. Vorrichtung (1) gemäss einem der vorher gehenden Ansprüche, **dadurch gekennzeichnet, dass** in dem ersten Abstützungsbereich (3) ein Führungselement (15a, 15b), insbesondere eine Ringelement, angebracht ist, das insbesondere in eine in dem Stützblock (6) vorgesehene korrespondierende Ausnehmung (16) einführbar ist.

10. Vorrichtung (1) gemäss einem der vorher gehenden Ansprüche, **dadurch gekennzeichnet, dass** die Sonotrode (2) zwei gegenüberliegende Abstützungsbereiche (3, 10) aufweist, die gleich ausbildet sind, insbesondere die Sontrode symmetrisch bezüglich einer 180°-Drehung ist, sodass sie mit einer Schraube (9) an den Stützblock (6) heranziehbar ist, unabhängig davon, welcher Abstützungsbereich (3, 10) an der Auflagefläche (7) des Stützblocks anliegt.

11. Vorrichtung (1) gemäss einem der vorher gehenden Ansprüche, **dadurch gekennzeichnet, dass** an der Sonotrode (2) bezüglich der Längsachse (L) umfangsseitig wenigstens eine Arbeitsfläche (17) angeordnet ist, bevorzugt zwei gegenüberliegende Arbeitsflächen (17, 18) vorgesehen sind.

12. Vorrichtung (1) gemäss einem der vorher gehenden Ansprüche, **dadurch gekennzeichnet, dass** die Sonotrode (2) einen Blockabschnitt (19) mit jeweils parallelen Seitenflächen, bevorzugt mit quadratischem Querschnitt, einen sich verjüngenden Abschnitt (20) und einen Arbeitsabschnitt (21), in welchem wenigstens eine Arbeitsfläche (17) angeordnet ist, aufweist.

13. Vorrichtung (1) gemäss Anspruch 12, **dadurch gekennzeichnet, dass** mindestens ein Abstützungsbereich (3, 10) in dem Blockabschnitt (19) der Sonotrode (2) angeordnet ist.

14. Vorrichtung (1) gemäss einem der vorher gehenden Ansprüche, **dadurch gekennzeichnet, dass** die Sonotrodenaufnahme (5) ein lösbares Indexierelement (28) zur Feinjustierung aufweist, insbesondere eine Indexierplatte (28), an der bevorzugt mindestens ein Zapfen (32) angebracht ist zum Eingriff in eine korrespondierende Nut (36) an einer Basisstation (33), wobei die Indexierplatte (28) bevorzugt mittels mindestens einer Schraube (29) fest an ein Ringelement (24) der Sonotrodenaufnahme (5) heranziehbar ist.

15. Sonotrode (2), insbesondere für einen Vorrichtung zum Ultraschallschweissen gemäss einem der Ansprüche 1-13, welche von einem Schwingungserzeuger zu Längsschwingungen anregbar ist, wobei die Sonotrode (2) einen Blockabschnitt (19) mit jeweils parallelen gegenüberliegenden Seitenflächen, bevorzugt mit quadratischem Querschnitt, und einen Arbeitsbereich, in welchem mindestens eine Arbeitsfläche (17, 18) angeordnet ist, aufweist,
**dadurch gekennzeichnet, dass** die Sonotrode (2) in dem Blockabschnitt (19) mindestens einen ersten Abstützungsbereich (3) aufweist, und in dem Abstützungsbereich (3) eine Gewindebohrung (4) vorgesehen ist, deren Gewindeachse (G) senkrecht zur Längsachse (L) der Sonotrode (2) verläuft.

16. Sonotrode (2) gemäss Anspruch 15, **dadurch gekennzeichnet, dass** die Sonotrode (2) mindestens einen zweiten Abstützungsbereich (10) aufweist, der dem ersten Abstützungsbereich (3) bevorzugt gegenüber liegt, wobei die Abstützungsbereiche (3, 10) bevorzugt gleich ausbildet sind, insbesondere die Sonotrode (2) symmetrisch bezüglich einer 180°-Drehung ist.
